# EUROPEAN PATENT APPLICATION

(11) **EP 4 789 902 A1**
(43) Date of publication of application: **12.08.2026**
(21) Application number: 24881260.4
(22) Date of filing: 02.09.2024
(51) Int. Cl.: B60L 15/20, B60L 15/32

(54) **TORQUE CONTROL METHOD AND APPARATUS, AND VEHICLE**

(30) Priority: 24.10.2023 CN 202311387577
(71) Applicant: Yinwang Intelligent Technologies Co., Ltd., Shenzhen, Guangdong 518110 (CN)
(72) Inventor: XIN, Zilin, Shenzhen, Guangdong 518110 (CN); YAN, Niwei, Shenzhen, Guangdong 518110 (CN); LIU, Donghao, Shenzhen, Guangdong 518110 (CN); ZHOU, Yongyou, Shenzhen, Guangdong 518110 (CN); HE, Lang, Shenzhen, Guangdong 518110 (CN)
(74) Representative: Henselmann, Alexander Gerhard
(86) International application number: PCT/CN2024/116294
(87) International publication number: WO 2025/086893

(57) **Abstract**

A torque control method and apparatus, and a vehicle are provided. The method includes: when a steering wheel angle of a vehicle is greater than or equal to an angle threshold, obtaining a first torque distribution ratio and a reference yawing angular velocity, where the first torque distribution ratio and the reference yawing angular velocity are determined based on the steering wheel angle, a real-time speed of the vehicle, and a preset steering feature; correcting the first torque distribution ratio based on an actual yawing angular velocity of the vehicle and the reference yawing angular velocity, to obtain a second torque distribution ratio; and distributing torques to a first motor and a second motor of the vehicle based on the second torque distribution ratio. The method in this application can be applied to the field of vehicle control, and can counteract impact of a road surface change, vehicle wear, and the like on torque distribution, to improve rationality and precision of driving/braking torques distributed to drive motors, so as to improve maneuverability and traveling stability of the vehicle.

## Description

This application claims priority to Chinese Patent Application No. 202311387577.8, filed with the China National Intellectual Property Administration on October 24, 2023 and entitled "TORQUE CONTROL METHOD AND APPARATUS, AND VEHICLE", which is incorporated herein by reference in its entirety.

### TECHNICAL FIELD

This application relates to the field of vehicle control, and more specifically, to a torque control method and apparatus, and a vehicle.

### BACKGROUND

In a traveling process of a vehicle, magnitudes of driving/braking torques output by a drive motor are adjusted through torque distribution, so that maneuverability and traveling stability of the vehicle can be improved. As vehicle drive technologies develop, drive motors gradually increase, and develop toward distributed drive. In a current technical background, front-rear distributed dual-drive motor systems are currently widely used due to advantages such as low technical costs and implementation difficulty of the front-rear distributed dual-drive motor systems, and a four-wheel drive configuration that can construct the vehicle. A dual-drive motor system is used as an example. Driving/braking torques may be distributed to a front shaft and a rear shaft, and distribution of the driving/braking torques may affect maneuverability and traveling stability of the vehicle. During traveling of the vehicle, a road surface condition of a road, a weather condition, and wear of the vehicle all affect the torque distribution.

In view of this, in the dual-drive motor system, how to improve rationality and precision of the driving/braking torques distributed to two drive motors becomes an urgent problem to be resolved.

### SUMMARY

This application provides a torque control method and apparatus, and a vehicle, to counteract impact of a road surface change, vehicle wear, and the like on torque distribution, so as to improve rationality and precision of driving/braking torques distributed to drive motors. In this way, maneuverability and traveling stability of the vehicle are improved.

According to a first aspect, a torque control method is provided. The method may be performed by a vehicle, or may be performed by a computing platform of a vehicle, or may be performed by a chip or a circuit of vehicle. This is not limited in this application.

The method includes: when a steering wheel angle of a vehicle is greater than or equal to an angle threshold, obtaining a first torque distribution ratio and a reference yawing angular velocity, where the first torque distribution ratio and the reference yawing angular velocity are determined based on the steering wheel angle, a real-time speed of the vehicle, and a preset steering feature; correcting the first torque distribution ratio based on an actual yawing angular velocity of the vehicle and the reference yawing angular velocity, to obtain a second torque distribution ratio; and distributing torques to a first motor and a second motor of the vehicle based on the second torque distribution ratio, where the first motor and the second motor are respectively configured to drive a front drive shaft and a rear drive shaft of the vehicle.

In some implementations, distributing the torques to the first motor and the second motor of the vehicle based on the second torque distribution ratio includes: determining, based on a torque actually required by the vehicle and the second torque distribution ratio, torques distributed to the first motor and the second motor. For example, the torque actually required by the vehicle is multiplied by the second torque distribution ratio, to obtain torques respectively distributed to the first motor and the second motor. The actual required torque may be a driving torque determined based on an opening width of an accelerator pedal of the vehicle, or the actual required torque may be a braking torque determined based on an opening width of a deceleration pedal of the vehicle.

In some other implementations, the second torque distribution ratio indicates a torque that needs to be transferred by a front axle drive motor to a rear axle drive motor or a torque that needs to be transferred by the rear axle drive motor to the front axle drive motor on the premise that basic torques are distributed to the front axle drive motor and the rear axle drive motor. Distributing the torques to the first motor and the second motor of the vehicle based on the second torque distribution ratio includes: determining a compensation torque based on the second torque distribution ratio, and determining, based on the basic torque and the compensation torque, torques respectively distributed to the first motor and the second motor. Compensation torques are torques additionally distributed to the first motor or the second motor based on the basic torque, and the compensation torque may be a negative value.

In the foregoing technical solution, a vehicle model may be constructed based on the preset steering feature, and the reference torque distribution ratio (for example, the first torque distribution ratio) may be determined based on the vehicle model and the actual steering wheel angle and the vehicle speed. When the vehicle is worn out greatly or a road surface condition is greatly different from the vehicle model, the first torque distribution ratio can be adjusted or corrected based on the actual yawing angular velocity of the vehicle, to counteract impact of a road surface change, vehicle wear, and the like on torque distribution, and improve rationality and precision of driving/braking torques distributed to drive motors. In this way, maneuverability and traveling stability of the vehicle are improved.

With reference to the first aspect, in some implementations of the first aspect, distributing the torques to the first motor and the second motor of the vehicle based on the second torque distribution ratio includes: distributing the torques to the first motor and the second motor of the vehicle based on the second torque distribution ratio and an actual inter-shaft rotation speed difference of the vehicle.

In the foregoing technical solution, in the torque distribution process, if there is a large slip between a front wheel and a rear wheel, the torques distributed to the first motor and the second motor are further adjusted based on the actual inter-shaft rotation speed difference. This helps control a rotation speed difference between a front shaft and a rear shaft, implement slip pre-control, and improve traveling stability of the vehicle.

With reference to the first aspect, in some implementations of the first aspect, the method further includes: determining a reference inter-shaft rotation speed difference based on the actual yawing angular velocity and the real-time speed, where the reference inter-shaft rotation speed difference is an inter-shaft rotation speed difference that causes the slip rate of the vehicle to be less than or equal to a slip rate threshold, and when a difference between the reference inter-shaft rotation speed difference and the actual inter-shaft rotation speed difference of the vehicle is greater than or equal to a first threshold, determining a torque transfer amount between the front drive shaft and the rear drive shaft based on the actual inter-shaft rotation speed difference; and distributing the torques to the first motor and the second motor of the vehicle based on the second torque distribution ratio and the actual inter-shaft rotation speed difference of the vehicle includes: determining, based on the second torque distribution ratio, a first torque distributed to the first motor and a second torque distributed to the second motor; and determining, based on the torque transfer amount and the first torque, to distribute a third torque to the first motor, and determining, based on the torque transfer amount and the second torque, to distribute a fourth torque to the second motor.

In the foregoing technical solution, when the difference between the actual inter-shaft rotation speed difference of the vehicle and the reference inter-shaft rotation speed difference is small, the torques are distributed to the front axle drive motor and the rear axle drive motor based on the second torque distribution ratio. When the difference between the actual inter-shaft rotation speed difference of the vehicle and the reference inter-shaft rotation speed difference is excessively large, the torques distributed to the front axle drive motor and the rear axle drive motor are further adjusted based on the actual inter-shaft rotation speed difference. This helps reduce control complexity in a torque adjustment process.

With reference to the first aspect, in some implementations of the first aspect, obtaining the first torque distribution ratio and the reference yawing angular velocity includes: when duration in which the real-time speed is greater than or equal to a speed threshold is greater than or equal to a duration threshold, and the steering wheel angle is greater than or equal to the angle threshold, obtaining the first torque distribution ratio and the reference yawing angular velocity.

In the foregoing technical solution, when a specific condition is met, the first torque distribution ratio and the reference yawing angular velocity are obtained, and the second torque distribution ratio is determined. This helps reduce power consumption required in a torque control process.

With reference to the first aspect, in some implementations of the first aspect, before obtaining the first torque distribution ratio and the reference yawing angular velocity, the method further includes: determining that a torque redistribution function is enabled, where the torque redistribution function is used to determine the second torque distribution ratio.

With reference to the first aspect, in some implementations of the first aspect, the method further includes: when the first motor and the second motor execute the torques distributed based on the second torque distribution ratio, and it is detected that a first stability function used to adjust chassis stability of the vehicle is enabled, controlling the torque of the first motor and the torque of the second motor to be restored to basic torques within first duration, where the basic torques are a torque of the first motor and a torque of the second motor before the torques distributed based on the second torque distribution ratio are executed.

For example, the first stability function may include at least one of an anti-lock braking system (anti-locked braking system, ABS) function, a traction control system (traction control system, TCS) function, and an electronic stability control (electronic stability control, ESC) function.

In the foregoing technical solution, when the stability function is enabled, the compensation torques distributed to the front axle drive motor and the rear axle drive motor based on the second torque distribution ratio are controlled to be restored to zero at a specific speed, to implement a smooth transition between the stability function and the function provided in the solutions of this application. This helps improve traveling stability of the vehicle.

With reference to the first aspect, in some implementations of the first aspect, before obtaining the first torque distribution ratio and the reference yawing angular velocity, the method further includes: when it is detected that a second stability function used to adjust the chassis stability of the vehicle changes from being enabled or run to being disabled, obtaining a steering feature of the vehicle when the second stability function is disabled, and adjusting the torque of the first motor and the torque of the second motor within second duration based on the steering feature, so that the vehicle maintains the steering feature; and obtaining the first torque distribution ratio and the reference yawing angular velocity includes: when the second duration ends, obtaining the first torque distribution ratio and the reference yawing angular velocity.

For example, the second stability function may include at least one of an ABS function, a TCS function, and an ESC function.

In some implementations, the first stability function and the second stability function are a same function.

In the foregoing technical solution, when the stability function is disabled, the vehicle turns to a specific control torque before the stability function is disabled, to implement a smooth transition between the stability function and the function provided in the solutions of this application. This helps improve traveling stability of the vehicle.

According to a second aspect, a torque control apparatus is provided. The apparatus includes: an obtaining unit, configured to: when a steering wheel angle of a vehicle is greater than or equal to an angle threshold, obtain a first torque distribution ratio and a reference yawing angular velocity, where the first torque distribution ratio and the reference yawing angular velocity are determined based on the steering wheel angle, a real-time speed of the vehicle, and a preset steering feature; and a processing unit, configured to: correct the first torque distribution ratio based on an actual yawing angular velocity of the vehicle and the reference yawing angular velocity, to obtain a second torque distribution ratio; and distribute torques to a first motor and a second motor of the vehicle based on the second torque distribution ratio, where the first motor and the second motor are respectively configured to drive a front drive shaft and a rear drive shaft of the vehicle.

With reference to the second aspect, in some implementations of the second aspect, the processing unit is configured to distribute the torques to the first motor and the second motor of the vehicle based on the second torque distribution ratio and an actual inter-shaft rotation speed difference of the vehicle.

With reference to the second aspect, in some implementations of the second aspect, the processing unit is further configured to: determine a reference inter-shaft rotation speed difference based on the actual yawing angular velocity and the real-time speed, where the reference inter-shaft rotation speed difference is an inter-shaft rotation speed difference that causes a slip rate of the vehicle to be less than or equal to a slip rate threshold; and when a difference between the reference inter-shaft rotation speed difference and the actual inter-shaft rotation speed difference of the vehicle is greater than or equal to a first threshold, determine a torque transfer amount between the front drive shaft and the rear drive shaft based on the actual inter-shaft rotation speed difference; determine, based on the second torque distribution ratio, a first torque distributed to the first motor and a second torque distributed to the second motor; and determine, based on the torque transfer amount and the first torque, to distribute a third torque to the first motor, and determine, based on the torque transfer amount and the second torque, to distribute a fourth torque to the second motor.

With reference to the second aspect, in some implementations of the second aspect, the obtaining unit is configured to: when duration in which the real-time speed is greater than or equal to a speed threshold is greater than or equal to a duration threshold, and the steering wheel angle is greater than or equal to the angle threshold, obtain the first torque distribution ratio and the reference yawing angular velocity.

With reference to the second aspect, in some implementations of the second aspect, the apparatus further includes a determining unit, configured to: before the obtaining unit obtains the first torque distribution ratio and the reference yawing angular velocity, determine that a torque redistribution function is enabled, where the torque redistribution function is used to determine the second torque distribution ratio.

With reference to the second aspect, in some implementations of the second aspect, the processing unit is further configured to: when the first motor and the second motor execute the torques distributed based on the second torque distribution ratio, and it is detected that a first stability function used to adjust chassis stability of the vehicle is enabled, control the torque of the first motor and the torque of the second motor to be restored to basic torques within first duration, where the basic torques are a torque of the first motor and a torque of the second motor before the torques distributed based on the second torque distribution ratio are executed.

With reference to the second aspect, in some implementations of the second aspect, before the obtaining unit obtains the first torque distribution ratio and the reference yawing angular velocity, the obtaining unit is further configured to: when it is detected that a second stability function used to adjust the chassis stability of the vehicle changes from being enabled or run to being disabled, obtain a steering feature of the vehicle when the second stability function is disabled. The processing unit is further configured to adjust the torque of the first motor and the torque of the second motor within second duration based on the steering feature, so that the vehicle maintains the steering feature. The obtaining unit is configured to: when the second duration ends, obtain the first torque distribution ratio and the reference yawing angular velocity.

According to a third aspect, an automatic parking apparatus is provided, the apparatus includes: a memory, configured to store a computer program; and a processor, configured to execute the computer program stored in the memory, to enable the apparatus to perform the method of any one of the possible implementations of the first aspect.

According to a fourth aspect, a vehicle is provided. The vehicle includes the apparatus according to any one of the possible implementations of the second aspect or the third aspect.

According to a fifth aspect, a computer program product is provided. The computer program product includes computer program code. When the computer program code is run on a computer, the computer is enabled to perform the method according to any one of the possible implementations of the first aspect.

It should be noted that the computer program code may be completely or partially stored in a first storage medium. The first storage medium may be encapsulated with a processor, or encapsulated separately from a processor.

According to a sixth aspect, a computer-readable medium is provided. The computer-readable medium stores instructions. When the instructions are executed by a processor, the processor is enabled to implement the method according to any one of the possible implementations of the first aspect.

According to a seventh aspect, a chip is provided. The chip includes a circuit, and the circuit is configured to perform the method according to any one of the possible implementations of the first aspect.

### BRIEF DESCRIPTION OF DRAWINGS

FIG. 1 is a block diagram of a drive system according to an embodiment of this application;
FIG. 2 is a block diagram of a torque control system according to an embodiment of this application;
FIG. 3 is a schematic flowchart of a torque control method according to an embodiment of this application;
FIG. 4 is another schematic flowchart of a torque control method according to an embodiment of this application;
FIG. 5 is a control logic diagram of a torque control method according to an embodiment of this application;
FIG. 6 is a diagram of torque changes of a front shaft and a rear shaft when a torque control method according to an embodiment of this application is applied;
FIG. 7 is a block diagram of a torque control apparatus according to an embodiment of this application;
FIG. 8 is still another block diagram of a torque control apparatus according to an embodiment of this application; and
FIG. 9 is a block diagram of an intelligent driving device according to an embodiment of this application.

### DESCRIPTION OF EMBODIMENTS

The following describes technical solutions in this application with reference to the accompanying drawings.

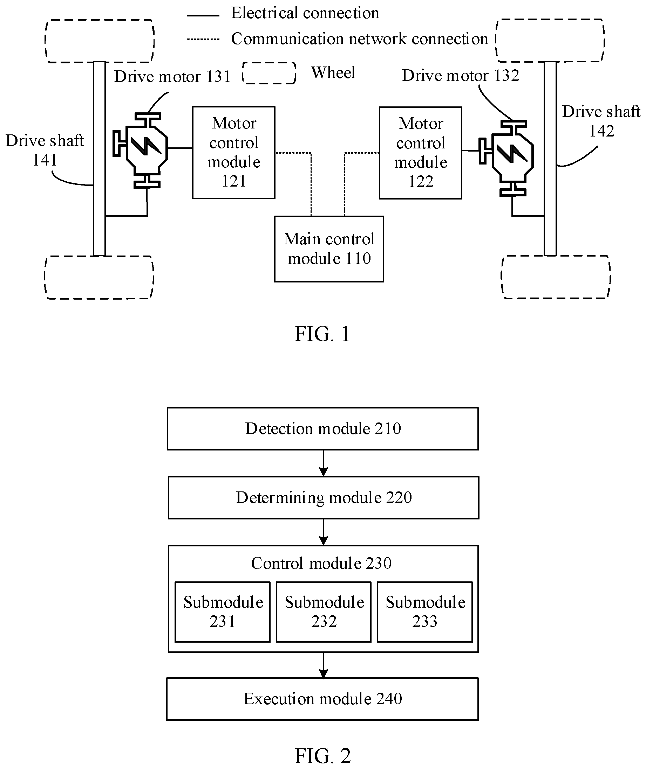

FIG. 1 is a diagram of a front-rear distributed dual-drive motor system of a vehicle. The drive system may include a main control module 110, a motor control module 121, a drive motor 131 (or referred to as a front axle motor), a drive shaft 141, a motor control module 122, and a drive motor 132 (or referred to as a rear axle motor) and a drive shaft 142. The main control module 110, the motor control module 121, and the motor control module 122 are connected through a communication network. The motor control module 121 is electrically connected to the drive motor 131, the drive motor 131 is electrically connected to the drive shaft 141, the motor control module 122 is electrically connected to the drive motor 132, and the drive motor 132 is electrically connected to the drive shaft 142. For example, the main control module 110 may determine, based on a real-time traveling parameter of the vehicle, driving/braking torques (referred to as a torque for short below) distributed to the motor control modules (121 and 122), and send information about the torque to the motor control modules (121 and 122) through a communication network. The communication network may include a controller area network (controller area network, CAN). The motor control module 121 controls, based on the received information about the torque, the drive motor 131 to provide driving force or braking force for front wheels of the vehicle through the drive shaft 141. The motor control module 122 controls, based on the received information about the torque, the drive motor 132 to provide driving force or braking force for rear wheels of the vehicle through the drive shaft 142.

For example, the main control module 110 may be a vehicle domain controller (vehicle domain controller, VDC), or may be a body domain controller (body domain controller, BDC), or may be another controller having a similar function. The motor control modules (121 and 122) may be micro control units (micro control unit, MCU), or may be electronic control units (electronic control unit, ECU), or may be other controllers having similar functions.

The system shown in FIG. 1 is merely an example for description. In specific implementation, the system may further include more or fewer components. For example, the system may further include components such as a differential and a retarder.

In a traveling process of the vehicle, the main control module 110 may calculate target output torques of the drive motors (131, 132) based on an opening width of an accelerator pedal or a deceleration pedal, and control the drive motor to act through the motor control modules (121, 122), to provide driving force or braking force for wheels. The main control module 110 may further determine a torque distribution ratio of the drive motors (131, 132) based on a yawing angular velocity of the vehicle, to control the yawing angular velocity of the vehicle within an appropriate range.

As described above, if the driving/braking torques are not appropriately distributed to the two drive motors, maneuverability and traveling stability of the vehicle may be affected. In an existing technical solution, during torque distribution, a case in which the vehicle is worn out in an actual use process is not considered, or simulation of an actual traveling road condition of the vehicle is inaccurate. As a result, a torque distribution ratio of the front axle motor and the rear axle motor is inaccurate, and when the front axle motor and the rear axle motor execute torques distributed by the torque distribution system to the front axle motor and the rear axle motor, the yawing angular velocity of the vehicle cannot be controlled within a preset range. Consequently, maneuverability and traveling stability of the vehicle are poor.

In view of this, an embodiment of this application provides a torque control method and apparatus, and a vehicle, to counteract impact of a road surface condition, a weather condition, vehicle wear, and the like on torque distribution, so as to improve rationality and precision of driving/braking torques distributed to drive motors. In this way, maneuverability and traveling stability of the vehicle are improved.

FIG. 2 is a diagram of an architecture of a torque control system according to an embodiment of this application. The system includes a detection module 210, a determining module 220, a control module 230, and an execution module 240. The determining module 220 and the control module 230 may be disposed in the main control module 110 shown in FIG. 1.

The detection module 210 may obtain the following information: 1. information stored in a control module (for example, the motor control module 121, the motor control module 122, the main control module 110 in FIG. 1, or a brake control module), for determining whether each control module is faulty; 2. vehicle instrument panel or button input, where when a torque redistribution function provided in this application is enabled or disabled by a user through the instrument panel or the button, the detection module 210 may obtain information about enabling or disabling the torque redistribution function; and information input by a driver such as an acceleration pedal opening width and a steering wheel angle; 3. vehicle sensor information, for example, vehicle body status sensor information such as a wheel speed detector and an inertial measurement unit (inertial measurement unit, IMU), for obtaining vehicle traveling parameters such as a wheel speed and a yawing angular velocity of the vehicle; 4. information fed back by the execution module, for example, information such as braking force and driving force that are monitored in real time; and 5. information about whether a chassis stability function is enabled. The chassis stability function includes but is not limited to: an ABS function, a TCS function, and an ESC function.

The determining module 220 may determine, based on information obtained by the detection module 210, whether to perform a torque redistribution procedure. For example, when the following three conditions are all met, the determining module 220 determines that torque redistribution can be performed: ① The torque redistribution function is enabled. ② The chassis stability function is disabled. ③ Duration in which a vehicle speed exceeds a speed threshold exceeds a duration threshold, and a steering wheel angle exceeds an angle threshold. When any one of the foregoing three conditions is not met, the determining module 220 determines not to perform the torque redistribution procedure.

The control module 230 may perform torque redistribution or stop performing torque redistribution based on a determining result of the determining module 220. For example, when performing torque redistribution, the control module 230 may determine the reference torque distribution ratio based on the steering wheel angle and the vehicle speed, then correct the reference torque distribution ratio based on an actual yawing angular velocity of a vehicle, and determine a torque distribution ratio of front and rear drive motors. For example, the control module 230 may include a submodule 231, a submodule 232, and a submodule 233. The submodule 231 is configured to perform a torque redistribution procedure. The submodule 232 is configured to: when a chassis stability function is enabled in a running process of the torque redistribution function, control a torque to be restored to a value obtained when the torque redistribution is not performed, so that the torque redistribution function is disabled. The submodule 233 is configured to: if the chassis stability function is enabled in the running process of the torque redistribution function, when the chassis stability function is disabled, distribute a torque based on a steering feature of the vehicle, to maintain the steering feature of the vehicle obtained when the chassis stability function is disabled; and when the torque is increased until the steering feature of the vehicle can be maintained, switch to the submodule 231 to continue performing the torque redistribution procedure.

For example, during running, the submodule 231, the submodule 232, and the submodule 233 respectively correspond to a working mode 1, a working mode 2, and a working mode 3. The working mode 1 is applied to a scenario in which a torque redistribution function runs. The working mode 2 is applied to a scenario in which a torque redistribution procedure is suspended when a chassis stability function is enabled in a running process of a torque redistribution function. The working mode 3 is applied to a scenario in which a chassis stability function is disabled and a torque redistribution procedure needs to be restarted.

It should be noted that, in a specific implementation process, the submodule 231, the submodule 232, and the submodule 233 may be combined into one module. In other words, when the torque redistribution function is running, the module may switch between the working mode 1, the working mode 2, and the working mode 3.

The execution module 240 may execute a torque distributed by the control module 230. A specific hysteresis manner in which the execution module 240 executes the torque is not limited in this application. For example, the control module 240 may include a motor control module 121 and a motor control module 122.

Based on the control system shown in FIG. 2, this application provides a torque control method.

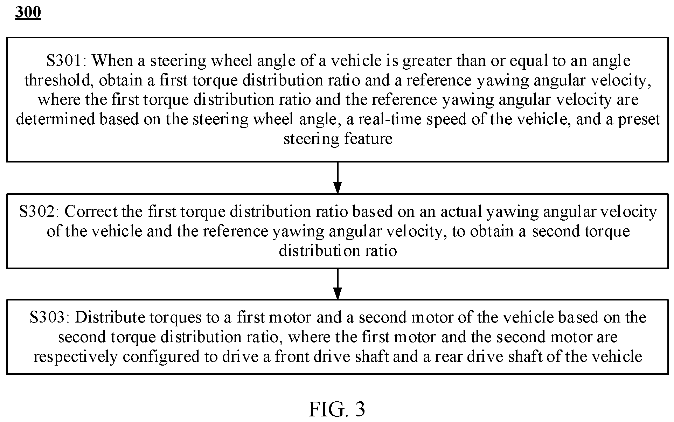

FIG. 3 is a schematic flowchart of a torque control method according to an embodiment of this application. The method may be performed by the main control module shown in FIG. 1, or may be performed by the control module 230 shown in FIG. 2. A method 300 may include S301 to S303.

S301: When a steering wheel angle of a vehicle is greater than or equal to an angle threshold, obtain a first torque distribution ratio and a reference yawing angular velocity, where the first torque distribution ratio and the reference yawing angular velocity are determined based on the steering wheel angle, a real-time speed of the vehicle, and a preset steering feature.

For example, the steering wheel angle of the vehicle may be detected by a steering wheel angle sensor, and the real-time speed of the vehicle may be determined based on a wheel speed detected by a wheel speed sensor.

In some implementations, the steering feature of the vehicle may be a change relationship between a steady-state yawing angular velocity gain and a vehicle speed, for example, may be represented by a change relationship between a turning radius and a vehicle speed: If the turning radius does not change with the vehicle speed, the steering feature is a neutral steering feature; if the turning radius increases with an increase of the vehicle speed, the steering feature is an insufficient steering feature; and if the turning radius decreases with an increase of the vehicle speed, the steering feature is an excessive steering feature. When driving force or braking force applied to a tire is not considered, the steering feature of the vehicle may be determined by stability parameters such as a vehicle body parameter and cornering stiffness of front and rear tires. The vehicle body parameter includes but is not limited to a vehicle mass, a tire radius, a friction coefficient of a tire material, a wheelbase, distances from a front shaft and a rear shaft to a center of mass, a front track width, a rear track width, and a distance from the center of mass to the ground.

The preset steering feature in this embodiment of this application may be a manually defined steering feature, or may be a steering feature determined through simulation. For example, the preset steering feature may indicate steering angles required by the vehicle at different vehicle speeds. When the vehicle supports a plurality of driving modes, the preset steering feature may further indicate steering angles required by the vehicle in different driving modes and at different vehicle speeds.

For example, reference yawing angular velocities and reference torque distribution ratios (for example, the first torque distribution ratio) that correspond to different vehicle speeds and steering wheel angles may be obtained through optimization solution based on a seven-degree-of-freedom vehicle kinematic model and by using a preset steering feature as an optimization objective.

S302: Correct the first torque distribution ratio based on an actual yawing angular velocity of the vehicle and the reference yawing angular velocity, to obtain a second torque distribution ratio.

It should be understood that, in an actual traveling process of the vehicle, due to impact of a parameter change of the vehicle, a road surface status change, a wind speed, and the like, there is a deviation between the actual yawing angular velocity of the vehicle and the reference yawing angular velocity. Therefore, the first torque distribution ratio may be corrected based on the actual yawing angular velocity. For example, the parameter change of the vehicle may include tire wear and a vehicle body mass change. The road surface status change may include a road surface friction coefficient change caused by a weather change (for example, rain or snow).

For example, an increased ratio value or a decreased ratio value based on the first torque distribution ratio is determined based on a difference between the actual yawing angular velocity and the reference yawing angular velocity, to reduce a difference between the actual yawing angular velocity and the reference yawing angular velocity. Further, the first torque distribution ratio and the increased ratio value (positive number) or the decreased ratio value (negative number) are added to obtain the second torque distribution ratio. For example, if the first torque distribution ratio indicates a ratio of a torque distributed to a front axle drive motor to a torque distributed to a rear axle drive motor, the increased ratio value indicates a torque that is distributed to the front axle drive motor to transfer to the rear axle drive motor, and the decreased ratio value indicates a torque that is distributed to the rear axle drive motor to transfer to the front axle drive motor.

For example, the first torque distribution ratio may be corrected based on a proportional-integral-derivative (proportional-integral-derivative, PID) controller, to obtain the second torque distribution ratio.

S303: Distribute torques to a first motor and a second motor of the vehicle based on the second torque distribution ratio, where the first motor and the second motor are respectively configured to drive a front drive shaft and a rear drive shaft of the vehicle.

For example, the first motor may be the drive motor 131 in the foregoing embodiment, and the second motor may be the drive motor 132 in the foregoing embodiment. Alternatively, the first motor may be the drive motor 132 in the foregoing embodiment, and the second motor may be the drive motor 131 in the foregoing embodiment.

For example, distributing the torques to the first motor and the second motor of the vehicle based on the second torque distribution ratio includes: respectively determining, based on a required torque and the second torque distribution ratio, a torque distributed to the first motor and a torque distributed to the second motor. The required torque is related to a running condition of the vehicle. For example, when the vehicle is in a driving condition, the required torque may be a required driving torque. When the vehicle is in a braking condition or an energy recovery condition, the required torque may be a required braking torque. The required driving torque may be determined based on an opening width of an accelerator pedal, and the required braking torque may be determined based on an opening width of a brake pedal.

In a torque distribution process of the front axle motor and the rear axle motor, because a torque distributed to a motor is greater than a basic torque or due to another reason, a large slip may occur between a front shaft and a rear shaft, thereby reducing stability of the vehicle. Therefore, the method further includes: determining a reference inter-shaft rotation speed difference based on the actual yawing angular velocity and the vehicle speed, where the reference inter-shaft rotation speed difference is an inter-shaft rotation speed difference that causes a slip rate of the vehicle to be less than or equal to a slip rate threshold; and when a difference between the reference inter-shaft rotation speed difference and the actual inter-shaft rotation speed difference of the vehicle is greater than or equal to a first threshold, determining a torque transfer amount between the front drive shaft and the rear drive shaft based on the actual inter-shaft rotation speed difference. Further, S302 may be specifically the following: Correct the first torque distribution ratio based on the actual yawing angular velocity, the reference yawing angular velocity, and the torque transfer amount, to obtain the second torque distribution ratio.

The basic torques are torques distributed to the front axle motor and the rear axle motor based on the required driving/braking torque and a fixed distribution ratio when a stability function and a torque redistribution function are disabled. For example, the fixed distribution ratio may be 1:1, or may be 2:3, or may be another ratio. The torque transfer amount may indicate a torque transferred from the front drive shaft to the rear drive shaft, or may indicate a torque transferred from the rear drive shaft to the front drive shaft.

For example, the first threshold may be 20 revolutions per minute (revolution per minute, rpm), or may be 30 rpm, or may be another value. The slip rate threshold may be 10%, 20%, or another value.

For example, correcting the first torque distribution ratio based on the actual yawing angular velocity, the reference yawing angular velocity, and the torque transfer amount to obtain the second torque distribution ratio includes: correcting the first torque distribution ratio based on the actual yawing angular velocity and the reference yawing angular velocity, to obtain a third torque distribution ratio; and when the difference between the reference inter-shaft rotation speed difference and the actual inter-shaft rotation speed difference of the vehicle is greater than or equal to the first threshold, determining the torque transfer amount between the front drive shaft and the rear drive shaft based on the actual inter-shaft rotation speed difference; and adjusting the third torque distribution ratio based on the torque transfer amount to obtain the second torque distribution ratio.

For example, when the difference between the reference inter-shaft rotation speed difference and the actual inter-shaft rotation speed difference of the vehicle is less than the first threshold, the third torque distribution ratio and the second torque distribution ratio are a same value.

In some implementations, when the difference between the reference inter-shaft rotation speed difference and the actual inter-shaft rotation speed difference of the vehicle is greater than or equal to the first threshold, S303 may be specifically the following: Distribute the torques to the first motor and the second motor based on the second torque distribution ratio and the actual inter-shaft rotation speed difference.

For example, distributing the torques to the first motor and the second motor based on the second torque distribution ratio and the actual inter-shaft rotation speed difference includes: determining, based on the second torque distribution ratio, a first torque distributed to the first motor and a second torque distributed to the second motor, determining, based on the torque transfer amount and the first torque, to distribute a third torque to the first motor, and determining, based on the torque transfer amount and the second torque, to distribute a fourth torque to the second motor. In an example, if the torque transfer amount is a torque transferred from the front drive shaft to the rear drive shaft, the third torque is a difference between the first torque and the torque transfer amount, and the fourth torque is a sum of the second torque and the torque transfer amount. The third torque and the fourth torque may be final torques respectively distributed to the first motor and the second motor, and a sum of the third torque and the fourth torque is an actually required torque.

For example, determining the torque transfer amount between the front drive shaft and the rear drive shaft based on the actual inter-shaft rotation speed difference may include: determining the torque transfer amount based on a front shaft rotation speed and an inner wheel rotation speed of a rear shaft. For example, it is determined that a rotation speed difference between the front shaft rotation speed and the inner wheel rotation speed of the rear shaft is less than or equal to the reference inter-shaft rotation speed difference, a torque that needs to be compensated for the front shaft is determined, or a torque that needs to be compensated for the rear shaft is determined, and the torque transfer amount is determined based on the torque that needs to be compensated for the front shaft or the rear shaft.

In a specific implementation process, the torque transfer amount may alternatively be a ratio value, or the torque transfer amount may be a specific value of the torque.

In some implementations, when the duration in which the vehicle speed is greater than or equal to the speed threshold is greater than or equal to the duration threshold, and the steering wheel angle is greater than or equal to the angle threshold, S301 is performed.

For example, the angle threshold may be 90 degrees, 100 degrees, or another threshold. The speed threshold may be 30 kilometers per hour (kilometer per hour, kph), or may be 25 kph, or may be another value. The duration threshold may be 3 seconds, 5 seconds, or another value.

In some implementations, before S301 is performed, it is determined that a torque redistribution function is enabled, and the torque redistribution function is used to determine the second torque distribution ratio.

In some implementations, when the first motor and the second motor execute the torques distributed based on the second torque distribution ratio, and it is detected that a first stability function used to adjust chassis stability of the vehicle is enabled, the torque of the first motor and the torque of the second motor are controlled to be restored to basic torques within first duration, where the basic torques are a torque of the first motor and a torque of the second motor before the torques distributed based on the second torque distribution ratio are executed.

For example, the first stability function may be one or more of the chassis stability functions in the foregoing embodiments. The first duration may be determined based on a preset steering feature. For example, the first duration may be 1 second, 3 seconds, or other duration.

In some implementations, before S301 is performed, when it is detected that a second stability function used to adjust the chassis stability of the vehicle changes from being run to being disabled, the steering feature of the vehicle when the second stability function is disabled is obtained. In second duration, the torque of the first motor and the torque of the second motor are adjusted based on the steering feature, so that the vehicle maintains the steering feature. When the second duration ends, S301 is performed.

For example, the second stability function may be one or more of the chassis stability functions in the foregoing embodiments. The second duration may be determined based on a preset steering feature. For example, the second duration may be 1 second, 3 seconds, or other duration.

According to the torque control method provided in this embodiment of this application, a vehicle model is constructed based on the preset steering feature, and the first torque distribution ratio may be determined based on the vehicle model and the actual steering wheel angle and the vehicle speed. When the vehicle is worn out greatly or a road surface condition is greatly different from the vehicle model, the first torque distribution ratio can be adjusted or corrected based on the actual yawing angular velocity of the vehicle, to counteract impact of a road surface condition, a weather condition, vehicle wear, and the like on torque distribution, and improve rationality and precision of driving/braking torques distributed to drive motors. In this way, maneuverability and traveling stability of the vehicle are improved. In a torque distribution process, if a torque difference between the front axle motor and the rear axle motor is excessively large, a large slip may be caused between the front wheel and the rear wheel. Therefore, the torques distributed to the first motor and the second motor are further adjusted based on the actual inter-shaft rotation speed difference. This helps control a rotation speed difference between the front shaft and the rear shaft, implement slip pre-control, and improve traveling stability of the vehicle.

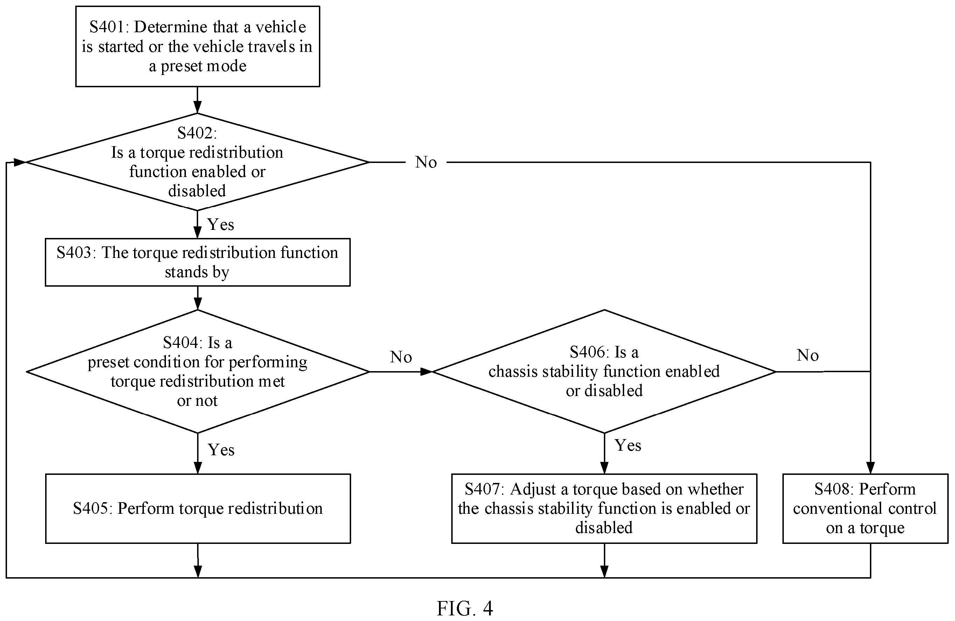

FIG. 4 is a diagram of an overall procedure of a torque control method according to an embodiment of this application. The method may be performed by the main control module shown in FIG. 1, or may be performed by the control module 230 shown in FIG. 2. A method 400 may be considered as an extension of the method 300 or a variation of the method 300. The method 400 may include S401 to S408.

S401: Determine that a vehicle is started or the vehicle travels in a preset mode.

For example, S402 is performed after the vehicle is started, or S402 is performed when the vehicle travels in the preset mode. The preset mode may be a motion mode, or may be another driving mode that is sensitive to a response to an input of a driver.

S402: Determine whether a torque redistribution function is enabled.

If the torque redistribution function is enabled, S403 is performed; otherwise, S408 is performed.

In some possible implementations, when the torque redistribution function is enabled or disabled, the driver may be prompted by using a display apparatus. The display apparatus may include a vehicle-mounted display and a projection display. The vehicle-mounted display is a physical display, for example, a digital instrument screen or a central display. The projection display may include a head-up display (head-up display, HUD), also referred to as a head-up display system, and may be configured to display, on a display device (for example, a windshield) in front of the driver, information about whether a torque redistribution function is enabled. This reduces line-of-sight transfer time of the driver, avoids a pupil change caused by the line-of-sight transfer of the driver, and improves traveling safety and comfort.

S403: The torque redistribution function stands by (stand by).

For example, when a steering wheel is at a return position, S403 is performed. When the steering wheel deviates from the return position, S404 is performed.

In some implementations, after S402 is performed, S403 may be skipped, and S404 is directly performed.

S404: Determine whether a preset condition for performing torque redistribution is met.

If the preset condition for torque redistribution is met, S405 is performed; otherwise, S406 is performed.

For example, the preset condition may include the following: ① A chassis stability function is not enabled. ② Duration in which a vehicle speed exceeds a speed threshold exceeds a duration threshold, and a steering wheel angle exceeds an angle threshold. When both ① and ② are met, it is determined that the preset condition for torque redistribution is met; otherwise, it is considered that the preset condition for torque redistribution is not met.

S405: Perform torque redistribution.

For example, for a specific procedure of performing torque redistribution, refer to the descriptions in the method 300, for example, refer to the descriptions of the method for determining the second torque distribution ratio in the method 300. Details are not described herein again.

S406: Determine whether the chassis stability function is enabled or disabled.

That the chassis stability function is enabled may be understood as a process in which the chassis stability function is switched from being disabled to being enabled. That the chassis stability function is disabled may be understood as a process in which the chassis stability function is switched from being enabled or run to being disabled. That the chassis stability function is not enabled or is disabled may be understood as that the chassis stability function is in a running state, or the chassis stability function is in a disabled state.

If it is determined that the chassis stability function is enabled or disabled, S407 is performed; otherwise, S408 is performed.

S407: Adjust a torque based on whether the chassis stability function is enabled or disabled.

For example, the chassis stability function may include the first stability function or the second stability function in the method 300. For a specific method of adjusting a torque based on enabling or disabling of the chassis stability function, refer to the descriptions in the method 300. Details are not described herein again.

S408: Perform conventional control on the torque.

The conventional control on the torque may include torque control performed when the torque redistribution function is not used. For example, torques are distributed to the front axle drive motor and the rear axle drive motor based on a fixed distribution ratio, or the front axle drive motor and the rear axle drive motor are controlled based on the chassis stability function.

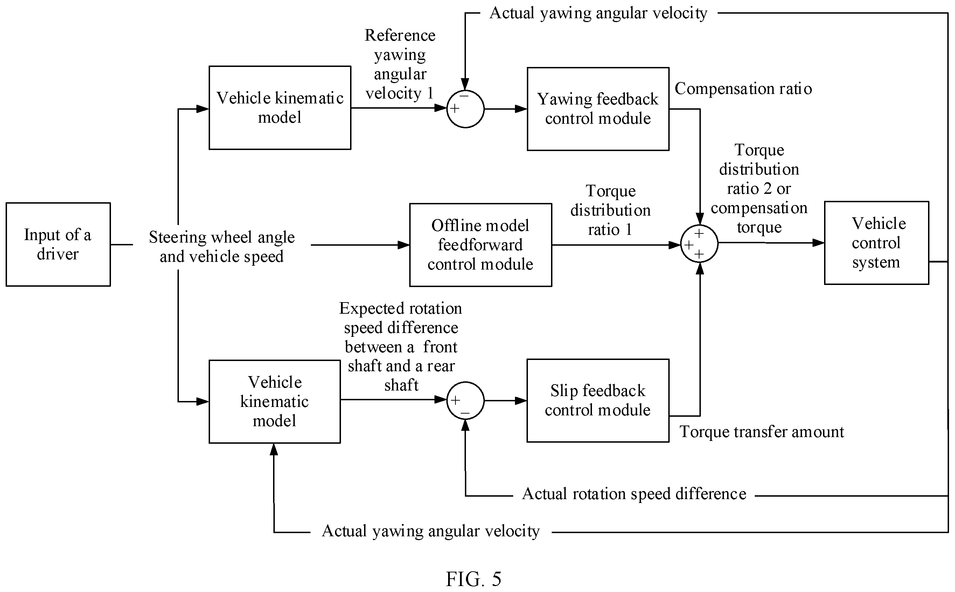

FIG. 5 is a control logic diagram of a torque control method according to an embodiment of this application. For example, an offline model feedforward control module stores preset information that is of a reference torque distribution ratio corresponding to a steering wheel angle and a vehicle speed and that is determined based on a preset steering feature, or the offline model feedforward control module can obtain reference yawing angular velocities and reference torque distribution ratios that correspond to different vehicle speeds and steering wheel angles through optimization solution by using the preset steering feature as an optimization objective. Therefore, an actual steering wheel angle of the vehicle and the vehicle speed that are determined based on an input of the driver are input into the offline model feedforward control module, to obtain a torque distribution ratio 1.

For example, the preset information may be determined based on an ideal vehicle body status or a fixed vehicle body parameter, and an ideal road surface status or a fixed road surface status. However, when the vehicle actually travels, a vehicle body status and/or a road surface status are/is different from a vehicle body status and/or a road surface status that are/is used to determine the preset information. As a result, the steering wheel angle and the vehicle speed do not match the torque distribution ratio 1. After torques are distributed to a front axle drive motor and a rear axle drive motor based on the torque distribution ratio 1, insufficient steering or excessive steering of the vehicle can be reduced. However, a reduction result of the insufficient steering or excessive steering based on the torque distribution ratio 1 cannot meet a preset target. Therefore, a compensation amount for the torque distribution ratio 1 may be determined based on an actual yawing angular velocity of the vehicle and the reference yawing angular velocity. For example, the actual steering wheel angle and the vehicle speed of the vehicle that are determined based on the input of the driver are input into a vehicle kinematic model, to obtain a reference yawing angular velocity 1. A difference between the actual yawing angular velocity and the reference yawing angular velocity is input into a yawing feedback control module, to obtain a compensation ratio. The compensation ratio may indicate a torque ratio of transfer from a front drive shaft to a rear drive shaft. A torque distribution ratio 2 obtained by adding the torque distribution ratio 1 and the compensation ratio is input into a vehicle control system, and the vehicle control system distributes torques to a front axle drive motor and a rear axle drive motor based on the torque distribution ratio 2 and an actually required torque.

Further, the steering wheel angle, the vehicle speed, and the actual yawing angular velocity are input into the vehicle kinematics model, to obtain a reference inter-shaft rotation speed difference. A difference between the reference inter-shaft rotation speed difference and an actual rotation speed difference is input into a slip feedback control module, to obtain a torque transfer amount, and the torque transfer amount may indicate a torque transferred from the front drive shaft to the rear drive shaft. The torque distribution ratio 2 determined based on the torque distribution ratio 1, the compensation ratio, and the torque transfer amount is input into the vehicle control system, and the vehicle control system distributes torques to the front axle drive motor and the rear axle drive motor based on the torque distribution ratio 2 and the actually required torque. Alternatively, a compensation torque is determined based on the torque distribution ratio 1, the compensation ratio, and torque transfer amount 2, and the compensation torque indicates a torque that needs to be transferred by the front drive shaft to the rear drive shaft based on a basic torque, or a torque that needs to be transferred by the rear drive shaft to the front drive shaft based on the basic torque. The vehicle control system decreases, based on the compensation torque, a torque distributed to a front axle drive motor, and increases a torque distributed to a rear axle drive motor. Alternatively, the vehicle control system decreases, based on the compensation torque, a torque distributed to the rear axle drive motor, and increases a torque distributed to the front axle drive motor.

For example, the torque distribution ratio 1 may be an example of the first torque distribution ratio, and the torque distribution ratio 2 may be an example of the second torque distribution ratio, the compensation ratio may be an example of an increased ratio value or a decreased ratio value based on the first torque distribution ratio.

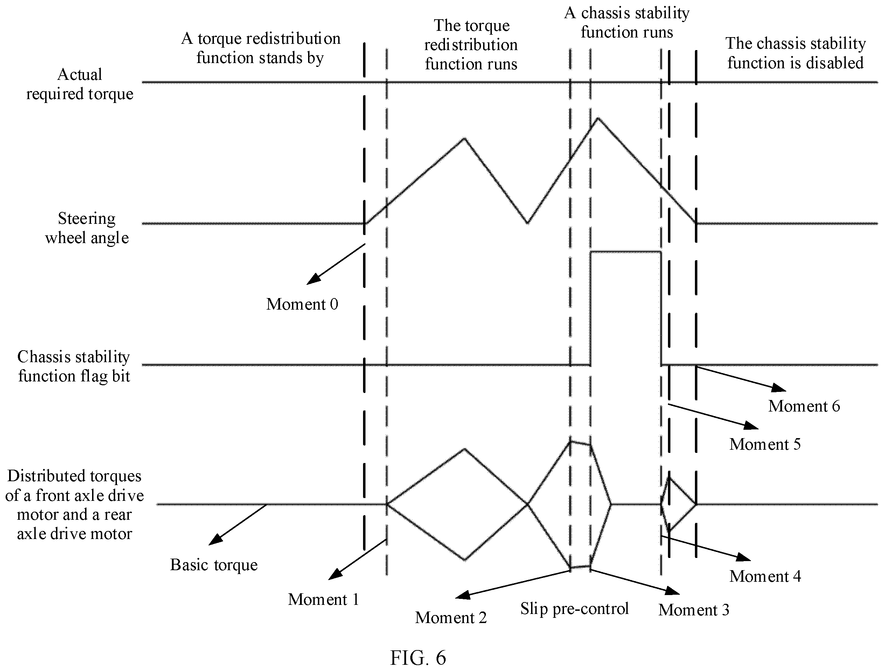

FIG. 6 is a diagram in which torques distributed to a front axle drive motor and a rear axle drive motor vary with a vehicle running condition when a torque is controlled by using a torque control method according to an embodiment of this application. As shown in FIG. 6, it is assumed that when a torque redistribution function is not run, torques are distributed to a front axle drive motor and a rear axle drive motor based on a fixed distribution ratio of 1:1, that is, basic torques distributed to the front axle drive motor and the rear axle drive motor are equal. In addition, before a moment 1, the torque redistribution function is in a standby state. At a moment 0, a steering wheel angle starts to gradually increase. If the steering wheel angle exceeds a preset threshold at the moment 1, the torque redistribution function starts to run at the moment 1, and a torque of the rear axle drive motor is transferred to the front axle drive motor based on the steering wheel angle. For example, torques are distributed to the front axle drive motor and the rear axle drive motor based on a second torque distribution ratio. When a difference between a driving torque of a front shaft and a driving torque of a rear shaft is excessively large, and consequently a difference between rotation speeds of the front shaft and the rear shaft is excessively large (for example, at the moment 2), slip pre-control is performed. For example, torques are distributed to the front axle drive motor and the rear axle drive motor based on the second torque distribution ratio and an actual inter-shaft rotation speed difference. At a moment 3, a chassis stability function starts to run, and torques of the front and rear drive motors are controlled to be restored to basic torques within specific duration. At a moment 4, when the chassis stability function is disabled, the torques of the front and rear drive motors are controlled to increase within specific duration (for example, duration between the moment 4 and a moment 5) to a value that can cause the vehicle to maintain a steering feature when the chassis stability function is disabled. Further, starting from the moment 5, a torque of the rear axle drive motor continues to be transferred to the front axle drive motor based on a steering wheel angle, for example, torques are distributed to the front axle drive motor and the rear axle drive motor based on the second torque distribution ratio. At a moment 6, the steering wheel angle decreases to 0, and the torque redistribution function is restored to the standby state.

In embodiments of this application, unless otherwise stated or there is a logic conflict, terms and/or descriptions between embodiments are consistent and may be mutually referenced, and technical features in different embodiments may be combined into a new embodiment based on an internal logical relationship thereof.

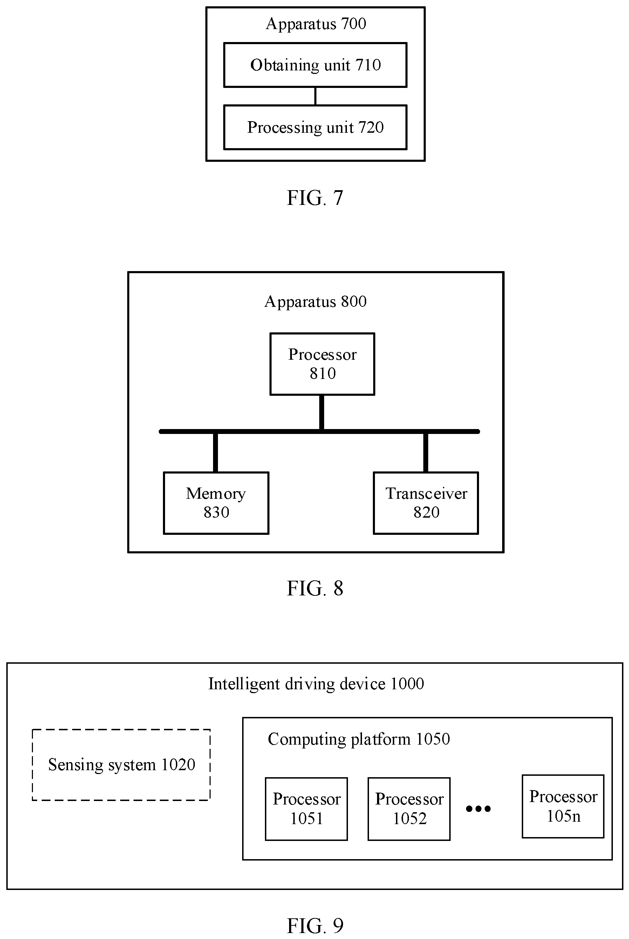

The foregoing describes in detail the fault detection methods provided in embodiments of this application with reference to FIG. 2 to FIG. 6. Torque control apparatuses provided in embodiments of this application are described below in detail with reference to FIG. 7 and FIG. 8. It should be understood that descriptions of the torque control apparatus embodiments correspond to the descriptions of the method embodiments. Therefore, for content that is not described in detail, refer to the method embodiments. For brevity, details are not described herein again.

FIG. 7 is a block diagram of a torque control apparatus 700 according to an embodiment of this application. The apparatus 700 may include a unit for executing the method in FIG. 3. In addition, units in the apparatus 700 are used to implement corresponding procedures in the method embodiment in FIG. 3.

Specifically, the apparatus 700 includes an obtaining unit 710 and a processing unit 720. The obtaining unit 710 is configured to: when a steering wheel angle of a vehicle is greater than or equal to an angle threshold, obtain a first torque distribution ratio and a reference yawing angular velocity, where the first torque distribution ratio and the reference yawing angular velocity are determined based on the steering wheel angle, a real-time speed of the vehicle, and a preset steering feature. The processing unit 720 is configured to: correct the first torque distribution ratio based on an actual yawing angular velocity of the vehicle and the reference yawing angular velocity, to obtain a second torque distribution ratio; and distribute torques to a first motor and a second motor of the vehicle based on the second torque distribution ratio, where the first motor and the second motor are respectively configured to drive a front drive shaft and a rear drive shaft of the vehicle.

In some implementations, the processing unit 720 is configured to distribute the torques to the first motor and the second motor of the vehicle based on the second torque distribution ratio and an actual inter-shaft rotation speed difference of the vehicle.

In some implementations, the processing unit 720 is further configured to: determine a reference inter-shaft rotation speed difference based on the actual yawing angular velocity and the real-time speed, where the reference inter-shaft rotation speed difference is an inter-shaft rotation speed difference that causes a slip rate of the vehicle to be less than or equal to a slip rate threshold; and when a difference between the reference inter-shaft rotation speed difference and the actual inter-shaft rotation speed difference of the vehicle is greater than or equal to a first threshold, determine a torque transfer amount between the front drive shaft and the rear drive shaft based on the actual inter-shaft rotation speed difference; determine, based on the second torque distribution ratio, a first torque distributed to the first motor and a second torque distributed to the second motor; and determine, based on the torque transfer amount and the first torque, to distribute a third torque to the first motor, and determine, based on the torque transfer amount and the second torque, to distribute a fourth torque to the second motor.

In some implementations, the obtaining unit 710 is configured to: when duration in which the real-time speed is greater than or equal to a speed threshold is greater than or equal to a duration threshold, and the steering wheel angle is greater than or equal to the angle threshold, obtain the first torque distribution ratio and the reference yawing angular velocity.

In some implementations, the apparatus further includes a determining unit, configured to: before the obtaining unit 710 obtains the first torque distribution ratio and the reference yawing angular velocity, determine that a torque redistribution function is enabled, where the torque redistribution function is used to determine the second torque distribution ratio.

In some implementations, the processing unit 720 is further configured to: when the first motor and the second motor execute the torques distributed based on the second torque distribution ratio, and it is detected that a first stability function used to adjust chassis stability of the vehicle is enabled, control the torque of the first motor and the torque of the second motor to be restored to basic torques within first duration, where the basic torques are a torque of the first motor and a torque of the second motor before the torques distributed based on the second torque distribution ratio are executed.

In some implementations, before the obtaining unit 710 obtains the first torque distribution ratio and the reference yawing angular velocity, the obtaining unit 710 is further configured to: when it is detected that a second stability function used to adjust the chassis stability of the vehicle changes from being enabled or run to being disabled, obtain a steering feature of the vehicle when the second stability function is disabled. The processing unit 720 is further configured to adjust the torque of the first motor and the torque of the second motor within second duration based on the steering feature, so that the vehicle maintains the steering feature. The obtaining unit 710 is configured to: when the second duration ends, obtain the first torque distribution ratio and the reference yawing angular velocity.

For example, the obtaining unit 710 and the processing unit 720 may be disposed in the main control module 110 shown in FIG. 1, or the obtaining unit 710 and the processing unit 720 may be disposed in the control module 230 shown in FIG. 2. More specifically, the obtaining unit 710 and the processing unit 720 may be disposed in the submodule 231 in the control module 230. For example, the operations performed by the obtaining unit 710 and the processing unit 720 may be performed by one processor, or may be performed by different processors.

In this embodiment of this application, the processor is a circuit having a signal processing capability. In an implementation, the processor may implement a specific function by using a logical relationship of a hardware circuit. The logical relationship of the hardware circuit is fixed or reconfigurable. For example, the processor is an application-specific integrated circuit (application-specific integrated circuit, ASIC) or a hardware circuit implemented by a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU).

In a specific implementation process, all or some of the units in the foregoing apparatus may be integrated together, or may be implemented independently. In an implementation, these units are integrated together and implemented in a form of a system-on-a-chip (system-on-a-chip, SoC).

FIG. 8 is another block diagram of a torque control apparatus according to an embodiment of this application. A torque control apparatus 800 shown in FIG. 8 may include a processor 810, a transceiver 820, and a memory 830. The processor 810, the transceiver 820, and the memory 830 are connected through an internal connection path. The memory 830 is configured to store instructions. The processor 810 is configured to execute the instructions stored in the memory 830, to implement the method in the foregoing embodiments. Optionally, the memory 830 may be coupled to the processor 810 through an interface, or may be integrated with the processor 810.

It should be noted that the transceiver 820 may include but is not limited to a transceiver apparatus, for example, an input/output interface (input/output interface), to implement communication between the apparatus 800 and another device or a communication network.

The memory 830 may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The transceiver 820 uses a transceiver apparatus, for example, but not limited to, a transceiver, to implement communication between the apparatus 810 and another device or a communication network, to receive/send data/information used to implement the method in the foregoing embodiments.

An embodiment of this application further provides a computing platform. The computing platform includes the torque control apparatus 700 or the torque control apparatus 800 in the foregoing embodiments.

An embodiment of this application further provides a vehicle. The vehicle includes the computing platform in the foregoing embodiments. Alternatively, the vehicle includes the torque control apparatus 700 or the torque control apparatus 800 in the foregoing embodiments.

FIG. 9 is a block diagram of an intelligent driving device according to an embodiment of this application. As shown in FIG. 9, an intelligent driving device 1000 includes a computing platform 1050, and the computing platform 1050 may include processors 1051 to 105n. For example, the processors 1051 to 105n may be, for example, a CPU, a microprocessor, a GPU, or a digital signal processor (digital signal processor, DSP). The apparatus 700 or the apparatus 800 may be disposed in one or more processors of the computing platform 1050. Optionally, the intelligent driving device 1000 may further include a sensing system 1020. The sensing system 1020 may include a sensor configured to obtain a traveling parameter of the intelligent driving device, for example, include but is not limited to a wheel speed detector and an IMU.

The intelligent driving device in this embodiment of this application may include a road transportation means, a water transportation means, an air transportation means, an industrial device, an agricultural device, an entertainment device, or the like. For example, the intelligent driving device may be a vehicle. The vehicle is a vehicle in a broad sense, and may be a transportation means (for example, a commercial vehicle, a passenger vehicle, a motorcycle, an airborne vehicle, or a train), an industrial vehicle (for example, a forklift truck, a trailer, or a tractor), an engineering vehicle (for example, an excavator, a bulldozer, or a crane), an agricultural device (for example, a lawn mower or a harvester), a recreational device, a toy vehicle, or the like. A type of the vehicle is not specifically limited in embodiments of this application.

For example, the intelligent driving device is a vehicle. The computing platform may include any one of the following: a VDC, an autonomous driving domain controller (advanced driving domain controller, ADC), and a cockpit domain controller (cockpit domain controller, CDC). For another example, the computing platform may further include but is not limited to an in-car application service controller (in-car application-server, ICAS), a BDC, a special equipment system (special equipment system, SAS), a media graphics unit (media graphics unit, MGU), a body super core (body super core, BSC), and an advanced driver assistant system super core (advanced driving assistant system super core, ADAS super core). The ICAS may include at least one of the following: a vehicle control server ICAS 1, an intelligent driving server ICAS 2, an intelligent cockpit server ICAS 3, and an information entertainment server ICAS 4.

An embodiment of this application further provides a computer program product. The computer program product includes computer program code. When the computer program code is run on a computer, the computer is enabled to implement the methods in the foregoing embodiments of this application.

An embodiment of this application further provides a computer-readable storage medium. The computer-readable medium stores computer instructions. When the computer instructions are run on a computer, the computer is enabled to implement the methods in the foregoing embodiments of this application.

An embodiment of this application further provides a chip, including a circuit, configured to perform the methods in the foregoing embodiments of this application.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

In descriptions of embodiments of this application, "/" means "or" unless otherwise specified. For example, A/B may indicate A or B. In this specification, "and/or" describes an association relationship between associated objects and indicates that three relationships may exist. For example, A and/or B may indicate the following three cases: Only A exists, both A and B exist, and only B exists. In this application, at least one means one or more, and a plurality of means two or more. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In embodiments of this application, prefix words such as "first" and "second" are used only to distinguish different described objects, and do not limit locations, a sequence, priorities, quantities, content, or the like of the described objects. In embodiments of this application, use of the prefix words, for example, an ordinal number, used to distinguish between the described objects does not constitute a limitation on the described objects. For descriptions of the described objects, refer to the descriptions of the context in the claims or embodiments. The use of such prefix words should not constitute a redundant limitation.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

In embodiments of this application, unless otherwise stated or there is a logic conflict, terms and/or descriptions between embodiments are consistent and may be mutually referenced, and technical features in different embodiments may be combined into a new embodiment based on an internal logical relationship thereof.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

The foregoing descriptions are merely specific implementations of this application, but are not intended to limit the protection scope of this application. Any variation or replacement readily figured out by persons skilled in the art within the technical scope disclosed in this application shall fall within the protection scope of this application. Therefore, the protection scope of this application shall be subject to the protection scope of the claims.

## Claims

1. A torque control method, comprising:
when a steering wheel angle of a vehicle is greater than or equal to an angle threshold, obtaining a first torque distribution ratio and a reference yawing angular velocity, wherein the first torque distribution ratio and the reference yawing angular velocity are determined based on the steering wheel angle, a real-time speed of the vehicle, and a preset steering feature;
correcting the first torque distribution ratio based on an actual yawing angular velocity of the vehicle and the reference yawing angular velocity, to obtain a second torque distribution ratio; and
distributing torques to a first motor and a second motor of the vehicle based on the second torque distribution ratio, wherein the first motor and the second motor are respectively configured to drive a front drive shaft and a rear drive shaft of the vehicle.

2. The method according to claim 1, wherein distributing the torques to the first motor and the second motor of the vehicle based on the second torque distribution ratio comprises:
distributing the torques to the first motor and the second motor based on the second torque distribution ratio and an actual inter-shaft rotation speed difference of the vehicle.

3. The method according to claim 2, wherein the method further comprises:
determining a reference inter-shaft rotation speed difference based on the actual yawing angular velocity and the real-time speed, wherein the reference inter-shaft rotation speed difference is an inter-shaft rotation speed difference that causes a slip rate of the vehicle to be less than or equal to a slip rate threshold; and
when a difference between the reference inter-shaft rotation speed difference and the actual inter-shaft rotation speed difference is greater than or equal to a first threshold, determining a torque transfer amount between the front drive shaft and the rear drive shaft based on the actual inter-shaft rotation speed difference; and
distributing the torques to the first motor and the second motor of the vehicle based on the second torque distribution ratio and the actual inter-shaft rotation speed difference of the vehicle comprises:
determining, based on the second torque distribution ratio, a first torque to be distributed to the first motor and a second torque to be distributed to the second motor; and
determining, based on the torque transfer amount and the first torque, to distribute a third torque to the first motor, and determining, based on the torque transfer amount and the second torque, to distribute a fourth torque to the second motor.

4. The method according to any one of claims 1 to 3, obtaining the first torque distribution ratio and the reference yawing angular velocity comprises:
when duration in which the real-time speed is greater than or equal to a speed threshold is greater than or equal to a duration threshold, and the steering wheel angle is greater than or equal to the angle threshold, obtaining the first torque distribution ratio and the reference yawing angular velocity.

5. The method according to any one of claims 1 to 4, wherein before obtaining the first torque distribution ratio and the reference yawing angular velocity, the method further comprises:
determining that a torque redistribution function is enabled, wherein the torque redistribution function is used to determine the second torque distribution ratio.

6. The method according to any one of claims 1 to 5, wherein the method further comprises:
when the first motor and the second motor execute the torques distributed based on the second torque distribution ratio, and it is detected that a first stability function used to adjust chassis stability of the vehicle is enabled, controlling the torque of the first motor and the torque of the second motor to be restored to basic torques within first duration, wherein
the basic torques are a torque of the first motor and a torque of the second motor before the torques distributed based on the second torque distribution ratio are executed.

7. The method according to any one of claims 1 to 6, wherein before obtaining the first torque distribution ratio and the reference yawing angular velocity, the method further comprises:
when it is detected that a second stability function used to adjust the chassis stability of the vehicle changes from being enabled or run to being disabled, obtaining a steering feature of the vehicle when the second stability function is disabled; and
adjusting the torque of the first motor and the torque of the second motor within second duration based on the steering feature, so that the vehicle maintains the steering feature; and
obtaining the first torque distribution ratio and the reference yawing angular velocity comprises:
when the second duration ends, obtaining the first torque distribution ratio and the reference yawing angular velocity.

8. A torque control apparatus, wherein the apparatus comprises:
an obtaining unit, configured to: when a steering wheel angle of a vehicle is greater than or equal to an angle threshold, obtain a first torque distribution ratio and a reference yawing angular velocity, wherein the first torque distribution ratio and the reference yawing angular velocity are determined based on the steering wheel angle, a real-time speed of the vehicle, and a preset steering feature; and
a processing unit, configured to: correct the first torque distribution ratio based on an actual yawing angular velocity of the vehicle and the reference yawing angular velocity, to obtain a second torque distribution ratio; and distribute torques to a first motor and a second motor of the vehicle based on the second torque distribution ratio, wherein the first motor and the second motor are respectively configured to drive a front drive shaft and a rear drive shaft of the vehicle.

9. The apparatus according to claim 8, wherein the processing unit is configured to:
distribute the torques to the first motor and the second motor based on the second torque distribution ratio and an actual inter-shaft rotation speed difference of the vehicle.

10. The apparatus according to claim 9, wherein the processing unit is further configured to:
determine a reference inter-shaft rotation speed difference based on the actual yawing angular velocity and the real-time speed, wherein the reference inter-shaft rotation speed difference is an inter-shaft rotation speed difference that causes a slip rate of the vehicle to be less than or equal to a slip rate threshold;
when a difference between the reference inter-shaft rotation speed difference and the actual inter-shaft rotation speed difference is greater than or equal to a first threshold, determine a torque transfer amount between the front drive shaft and the rear drive shaft based on the actual inter-shaft rotation speed difference;
determine, based on the second torque distribution ratio, a first torque to be distributed to the first motor and a second torque to be distributed to the second motor; and
determine, based on the torque transfer amount and the first torque, to distribute a third torque to the first motor, and determine, based on the torque transfer amount and the second torque, to distribute a fourth torque to the second motor.

11. The apparatus according to any one of claims 8 to 10, wherein the obtaining unit is configured to:
when duration in which the real-time speed is greater than or equal to a speed threshold is greater than or equal to a duration threshold, and the steering wheel angle is greater than or equal to the angle threshold, obtain the first torque distribution ratio and the reference yawing angular velocity.

12. The apparatus according to any one of claims 8 to 11, wherein the apparatus further comprises a determining unit, configured to: before the obtaining unit obtains the first torque distribution ratio and the reference yawing angular velocity, determine that a torque redistribution function is enabled, wherein the torque distribution function is used to determine the second torque distribution ratio.

13. The apparatus according to any one of claims 8 to 12, wherein the processing unit is further configured to:
when the first motor and the second motor execute the torques distributed based on the second torque distribution ratio, and it is detected that a first stability function used to adjust chassis stability of the vehicle is enabled, control the torque of the first motor and the torque of the second motor to be restored to basic torques within first duration, wherein the basic torques are a torque of the first motor and a torque of the second motor before the torques distributed based on the second torque distribution ratio are executed.

14. The apparatus according to any one of claims 8 to 13, wherein before the obtaining unit obtains the first torque distribution ratio and the reference yawing angular velocity, the obtaining unit is further configured to:
when it is detected that a second stability function used to adjust the chassis stability of the vehicle changes from being enabled or run to being disabled, obtain a steering feature of the vehicle when the second stability function is disabled;
the processing unit is further configured to adjust the torque of the first motor and the torque of the second motor within second duration based on the steering feature, so that the vehicle maintains the steering feature; and
the obtaining unit is configured to:
when the second duration ends, obtain the first torque distribution ratio and the reference yawing angular velocity.

15. A torque control apparatus, comprising:
a memory, configured to store a computer program; and
a processor, configured to execute the computer program stored in the memory, to enable the apparatus to perform the method according to any one of claims 1 to 7.

16. A vehicle, wherein the vehicle comprises the apparatus according to any one of claims 8 to 15.

17. A computer-readable storage medium, wherein the computer-readable storage medium stores instructions, and when the instructions are executed by a processor, the processor is enabled to implement the method according to any one of claims 1 to 7.

18. A chip, wherein the chip comprises a circuit, and the circuit is configured to perform the method according to any one of claims 1 to 7.
